# EUROPÄISCHE PATENTSCHRIFT

(11) **EP 3 509 809 B1**
(45) Veröffentlichungstag und Bekanntmachung des Hinweises auf die Patenterteilung: **04.05.2022**
(21) Anmeldenummer: 17746066.4
(22) Anmeldetag: 27.07.2017
(51) Int. Cl.: B65D 83/38, B29B 11/14, B29C 45/00, B29C 49/06, B29C 49/64, B29C 49/08, B29B 11/08

(54) **AEROSOLBEHÄLTER AUS KUNSTSTOFF**
AEROSOL CONTAINER MADE OF PLASTIC
RÉSERVOIR AÉROSOL EN MATIÈRE PLASTIQUE

(30) Priorität: 12.09.2016 CH 11832016
(43) Veröffentlichungstag der Anmeldung: 17.07.2019
(73) Patentinhaber: Alpla Werke Alwin Lehner GmbH & Co. KG, 6971 Hard (AT)
(72) Erfinder: SIEGL, Robert, 6850 Dornbirn (AT)
(74) Vertreter: Bohest AG Branch Ostschweiz
(86) Internationale Anmeldenummer: PCT/EP2017/068982
(87) Internationale Veröffentlichungsnummer: WO 2018/046175

(56) Entgegenhaltungen:
- EP-A1- 0 465 741
- EP-A1- 0 873 946
- EP-B1- 1 791 769
- WO-A1-2013/112913
- US-A- 3 926 324
- US-A- 5 066 081
- US-A- 5 122 325
- US-A- 5 206 062
- US-A- 5 573 043
- US-A- 5 709 324
- US-A1- 2006 060 554

## Beschreibung

Die Erfindung betrifft einen Aerosolbehälter aus Kunststoff gemäss dem Oberbegriff des Patentanspruchs 1.

Aerosolbehälter werden üblicherweise aus Metall, insbesondere aus Weissblech oder aus Aluminium, hergestellt. Vereinzelt finden sich auch Aerosolbehälter aus Glas auf dem Markt. Damit soll insbesondere der für derartige Behälter mit einer Verpackungsgrösse über 50 ml geltenden Direktive EC 75/324 der Europäischen Gemeinschaft Rechnung getragen werden. Aerosolbehälter aus Metall haben den Nachteil, dass sie mit der Zeit Rost ansetzen können. Auch können Beschichtungen, mit denen die Metallbehälter insbesondere auf ihrer Innenseite gegen Rost geschützt sind, unerwünschte Stoffe wie Bisphenol A absondern. Auch besteht bei Metallbehältern eine gewisse Gefahr, dass diese Oberflächen, mit denen sie in Kontakt kommen, zerkratzen können. Aerosolbehälter aus Glas wiederum haben den Nachteil, dass sie bei unsachgemässer Handhabung, beispielweise im Fall eines Sturzes zu Boden, brechen können.

Es besteht daher schon länger Interesse daran, Aerosolbehälter als Kunststoffbehälter auszubilden. Mehrere Gründe sprechen für den Ersatz der bekannten metallischen Aerosoldruckbehälter durch Aerosolbehälter aus Kunststoff:Die Kunststoffbehälter sind üblicherweise energieeffizienter und kostengünstiger herstellbar als Aerosolbehälter aus Metall oder Aluminium. Allerdings ist der Ersatz der bekannten Aerosolbehälter aus Weissblech oder Aluminium durch solche aus Kunststoff nicht trivial, da Aerosoldruckbehälter in der Regel deutlich höheren Innendrücken standhalten müssen, als dies beispielsweise bei Kunststoffflaschen für karbonisierte Softdrinks der Fall ist. Während bei Softdrinkflaschen typischerweise Innendrücke von 2 bar bis 4 bar verwendet werden, müssen Aerosolbehälter aus Kunststoff Innendrücken von 5 bar bis 15 bar bei Raumtemperatur standhalten, bzw. bei Erwärmung sogar Innendrücken von bis zu 40 bar. Aerosolbehälter aus Kunststoff müssen gegenüber dem eingesetzten Treibgas und dem Füllmedium chemisch stabil sein. Auch ist es bekannt, dass verschiedene Kunststoffe bei einem Kontakt beispielsweise mit Seifenlaugen oder dergleichen ihre mechanischen Eigenschaften zum Schlechteren verändem können. So kann beispielsweise ein Kontakt des Behälterbodens mit Seifenlauge, wie sie oft in Badezimmern anzutreffen sein kann, im Behälterboden Spannungsrisse auslösen, die bis zu einem Versagen des Bodens führen können. Auch muss berücksichtigt werden, dass manche Kunststoffe leicht entzündbar sein können. Bei kleinen Wandstärken und beispielsweise brennbaren Treibgasen kann deshalb bereits eine mit der Oberfläche des Kunststoffbehälters kurzzeitig in Berührung kommende Zigarette zu problematischen Situationen führen.

US5206062A offenbart einen Aerosolbehälter aus Kunststoff mit einem Hals, dessen Öffnung durch eine mittels eines Druckkopfes betätigbare Ventileinheit druckdicht verchliessbar bzw. verschlossen ist, und der mit einem flüssigen oder gasförmigen Treibmittel und einer zu versprühenden Flüssigkeit befüllbar bzw. gefüllt ist, wobei der Aerosolbehälter als ein spritzgegossener Preform mit einem länglichen, röhrchenartigen Preformkörper ausgebildet ist, der einen Preformboden aufweist, welcher in einer axialen Richtung von einem einstückig angeformten Standbereich überragt wird, und an seinem gegenüberliegenden axialen Längsende einen an den Preformkörper anschliessenden Hals mit der Öffnung aufweist.

US5066081A offenbart einen Preform aus Kunststoff mit einem Hals, dessen Öffnung verchliessbar ist, wobei der Prefrom als ein spritzgegossener Preform mit einem länglichen, röhrchenartigen Preformkörper ausgebildet ist, der einen konvexen kuppeiförmigen Preformboden aufweist, welcher in einer axialen Richtung von einem einstückig angeformten Standbereich überragt wird, und an seinem gegenüberliegenden axialen Längsende einen an den Preformkörper anschliessenden Hals mit der Öffnung aufweist.

Aufgabe der vorliegenden Erfindung ist es daher, einen Aerosolbehälter aus Kunststoff zu schaffen, der den vorstehend geschilderten Nachteilen der Aerosolbehälter des Stands der Technik Rechnung trägt. Dabei sollen Spannungsrisse im Kunststoffmaterial, beispielsweise des Behälterbodens oder der Behälterschulter, infolge von Eigenspannungen des verwendeten Kunststoffmaterials und durch den auftretenden Innendruck vermieden werden. Derartige Risse könnten sich im Laufe der Lagerungsdauer vergrössern und zu Leckagen oder sogar zu einem vollständigen Versagen der davon betroffenen Bereiche des Kunststoffbehälters, beispielsweise des Behälterbodens oder der Behälterschulter, führen. Beeinträchtigungen der mechanischen Festigkeit insbesondere des Behälterbodens, beispielsweise durch Kontakt mit Seifenlauge oder dergleichen, sollen verhindert werden können.

Die Lösung der geschilderten und noch weiterer Aufgaben besteht in einem Aerosolbehälter aus Kunststoff, welcher wenigstens die im Patentanspruch 1 angeführten Merkmale aufweist. Weiterbildungen und/oder vorteilhafte Ausführungsvarianten der Erfindung sind Gegenstand der abhängigen Patentansprüche.

Durch die Erfindung wird ein Aerosolbehälter aus Kunststoff mit einem Hals, dessen Öffnung durch eine mittels eines Druckkopfes betätigbare Ventileinheit druckdicht verschliessbar bzw. verschlossen ist, und der mit einem flüssigen oder gasförmigen Treibmittel und einer zu versprühenden Flüssigkeit befüllbar bzw. gefüllt ist, vorgeschlagen. Der Aerosolbehälter ist als ein spritzgegossener Preform mit einem länglichen, röhrchenartigen Preformkörper ausgebildet. Der Preformkörper ist mit einem konvexen, kuppelförmigen Preformboden verschlossen, der in einer axialen Richtung von einem einstückig angeformten Standbereich überragt wird. An seinem gegenüberliegenden axialen Längsende schliesst der Preformkörper an Hals mit der Öffnung an. Der Hals ist zur Aufnahme der Ventileinheit ausgebildet.

Es versteht sich, dass der Preform einstückig ausgebildet ist und damit der Standbereich von der Einstückigkeit mit umfasst ist. Überraschenderweise erweist sich ein Aerosolbehälter aus Kunststoff, der in einem Spritzgiessverfahren als ein Preform ausgebildet ist, als ausreichend innendruckbeständig, ohne dass es durch die gegenüber beispielsweise in einem Blasverfahren biaxial streckverfestigten Behälter höhere Wandstärke des Preforms zu einer erhöhten Anfälligkeit gegenüber dem Phänomen "Stress Cracking" kommt. Der Boden des Preforms wird axial von einem einstückig angeformten Standbereich überragt. Dadurch kann verhindert werden, dass der Preformboden des auf einer Standfläche des Standbereichs abgestellten Preforms mit Seifenlauge oder dergleichen in Berührung kommt und dadurch im Preformboden Spannungsrisse erzeugt werden könnten. Durch den den Behälterboden axial überragenden Standbereich ist auch der Anspritzpunkt des Preforms geschützt. Dieser kann in der Regel nie vollständig homogen und stressfrei wie der übrige Preformkörper gespritzt werden. Dadurch ist er üblicherweise auch anfälliger gegenüber kurzzeitigen Spannungsspitzen, wie sie beispielsweise bei einem Aufprall auf eine feste Unterlage auftreten könnten. Der Standbereich kann verhindern, dass der Behälterboden derartige Spannungsspitzen erleidet. Der als ein spritzgegossener Preform ausgebildete Aerosolbehälter aus Kunststoff weist eine hohe Eigensteifigkeit auf und ist von Hand nicht komprimierbar. Durch die höhere Wandstärke des Preforms ist dieser auch resistent gegenüber lokalen höheren Temperaturbelastungen, wie sie beispielsweise durch eine ungewollte Berührung der Oberfläche des Kunststoffbehälters mit einer Zigarettenspitze auftreten könnten.

Unter einem erhöhten Innendruck im Sinne der vorliegenden Erfindung ist ein gegenüber dem atmosphärischen Druck erhöhter Innendruck von 500 kPa bis 1500 kPa bei einer Raumtemperatur von 22°C zu verstehen. Der Aerosolbehälter aus Kunststoff ist hierbei derart ausgelegt, dass er dem erhöhten Innendruck ab Produktionsdatum während mindestens sechs Monaten standhält. Der Berstdruck des Aerosolbehälters ist gleich oder grösser als 2200 kPa, und beträgt bevorzugt von 3000 kPa bis 4000 kPa.

In einer Ausführungsvariante des Aerosolbehälters kann eine Standfläche des Standbereichs eine Außenseite des konvexen Preformbodens an seiner tiefsten Stelle um eine Distanz von 1,5 mm bis 3 mm, vorzugsweise um 1,8 mm bis 2,6 mm überragt. Bei den angeführten Abständen einer Außenseite des Behälterbodens von der Unterlage kann gewährleistet werden, dass der Behälterboden nicht in Berührung mit einer beispielsweise auf der Unterlage vorhandenen Lache einer Seifenlauge oder dergleichen kommt.

In einer weiteren Ausführungsvariante des Aerosolbehälters kann der Standbereich als ein in Umfangsrichtung geschlossener Hohlzylinderabschnitt ausgebildet sein. Die in Umfangsrichtung geschlossene Ausbildung des hohlzylindrischen Standbereichs verleiht diesem eine hohe Eigensteifigkeit. Dadurch ergibt sich die Möglichkeit, den Standbereich beim Spritzgiessen auch mit einer geringeren Wandstärke auszuformen als den übrigen Preform. Der hohlzylindrische Standbereich kann auch radiale Kräfte und Spannungen beispielsweise aufgrund des erhöhten Innendrucks aufnehmen und damit den Bereich um den Anspritzpunkt entlasten, der häufig zur Ausbildung von Spannungsrissen neigt. Eine Wandstärke des hohlzylindrischen Standbreichs kann größer, gleich oder kleiner als eine durchschnittliche Wandstärke des Preformkörpers sein.

In einer alternativen Ausführungsvariante des Aerosolbehälters kann der Standbereich von einer vorbestimmten Anzahl den Preformboden axial überragenden Standbeinen gebildet sein. Die Standbeine sind dabei durch sich im wesentlichen in axialer Richtung erstreckende Längsschlitze voneinander getrennt. Das Vorsehen einer vorbestimmten Anzahl voneinander getrennter Standbeine kann die Standfestigkeit des Kunststoffbehälters erhöhen. Die Längsschlitze, welche die Standbeine voneinander trennen, ermöglichen die Verdrängung von Flüssigkeit, die vom Standbereich eingeschlossen ist, nach aussen. Zudem kann durch das Vorsehen einzelner Standbeine anstelle eines geschlossenen zylindrischen Abschnitts Kunststoffmaterial eingespart werden.

In einer Ausführungsvariante des Aerosolbehälters mit Standbeinen kann deren vorbestimmte Anzahl wenigstens drei betragen. Dabei können die Standbeine sich zu ihren freien axialen Längsenden, also den jeweiligen Standflächen, verjüngen, sodass sich beim Abstellen des Aerosolbehälters auf eine Unterlage eine quasi-punktuelle Auflage ergibt. Da eine Ebene durch drei Punkte festgelegt ist, kann sich dadurch eine sehr stabile Lage ergeben und können Unregelmässigkeiten der Unterlage ausgeglichen werden.

Eine radial gemessene Wandstärke des Standbereichs des Aerosolbehälters kann von 1 mm bis 6 mm betragen. Bei einer weiteren Ausführungsvariante des als ein spritzgegossener Preform ausgebildeten Aerosolbehälters kann ein Mantel des Standbereichs übergangslos an eine Aussenwandung des Preformkörpers anschliessen. Hierbei können der Mantel und die Aussenwandung des Preformkörpers bündig sein. Somit können Mantel und Aussenwandung des Preforms unter Vernachlässigung von Entformungsschrägen als ein gerader Kreiszylinder ausgebildet sein.

Bei einer Ausführungsvariante des Aerosolbehälters kann der Preformkörper eine mittlere Wandstärke von 1 mm bis 6 mm aufweisen. Die Wandstärke wird hierbei senkrecht auf die Wandung des Preformkörpers gemessen. Ein Preform mit den angeführten Wandstärken ist im Spritzgiessverfahren herstellbar, ohne dass es dabei zu übermässigen, die mechanischen Eigenschaften des Preforms beeinträchtigenden Spannungen kommt. Derartige Spannungen können beim Abkühlen des spritzgegossenen Preforms auftreten und sind um so höher, je grösser der Unterschied zwischen dem Aussendurchmesser des Preforms und seinem Innendurchmesser , respektive je größer die Wandstärke des Preforms ist. Die Spannungen sind eine Folge der unterschiedlichen Kontraktion der Aussenwandung und der Innenwandung des spritzgegossenen Preforms. Ferner sind die Spannungen abhängig von dem Verhältnis von Spritztemperatur zu Abkühltemperatur. Je höher die Spritztemperatur ist, desto höher sind bei gleicher Abkühltemperatur, gleichem Kunststoff und gleichem Preform die Spannungen. Diese Thermospannungen könnten sich mit den infolge des erhöhten Innendrucks des Kunststoff-Aerosolbehälters auftretenden Innendruckspannungen überlagern. Durch den gewählten Wandstärkenbereich können diese Thermospannungen weitgehend reduziert werden. Der Bodenbereich des Aerosolbehälters ist konvex kuppelförmig ausgebildet. Durch diese Annäherung an die Kugelform können Biegespannungen im Bodenbereich weitestgehend vermieden werden.

Indem in einer weiteren Ausführungsvariante des Aerosolbehälters auch der Preformboden eine Wandstärke von 1 mm bis 6 mm aufweist, können auch in diesem Bereich des Aerosolbehälters Thermospannungen weitgehend vermieden werden. Auch hier wird die Wandstärke senkrecht auf die Wandung des Preformbodens gemessen.

Für die Handhabung und die Kontrolle des Behälterinhalts kann es sich als zweckmässig erweisen, wenn in einer weiteren Ausführungsvariante des Aerosolbehälters der Preformkörper wenigstens einen transparenten Abschnitt aufweist, der sich über seine axiale Länge erstreckt. Dieser transparente Abschnitt kann eine einfache Füllstandskontrolle bzw. in Verbindung mit einer Skala eine sehr einfache Dosiermengenabschätzung erlauben, welche nicht nur für medizinische Anwendungen wie bspw. für Asthmasprays oder dergleichen relevant sein kann, sondern auch für zahlreiche andere Anwendungen sinnvoll sein kann.

Eine weitere Ausführungsvariante des Aerosolbehälters kann schliesslich vorsehen, dass sein Preformkörper zur Gänze transparent ausgebildet ist. Auch hier kann eine Skala angebracht sein.

In einer weiteren Ausführungsvariante des Aerosolbehälter kann dieser aus einem Kunststoff bestehen, der beim Spritzgiessen des Preforms ein Verhältnis seiner Fliesslänge zu einer im Spritzgiessen zu erzeugenden Wandstärke von 20 bis 70 aufweist. Bei diesen Verhältnissen ist der Spritzgiessprozess des Aerosolbehälters mit einer wirtschaftlich vertretbaren Zykluszeit durchführbar und können andererseits thermisch bedingte Spannungen im Preform infolge der beim Abkühlen auftretenden unterschiedlichen Kontraktion des Kunststoffmaterials an der Aussenwandung und an der Innenwandung des Preforms weitgehend vermieden werden.

In einer Ausführungsvariante kann der als ein spritzgegossener Preform ausgebildete Aerosolbehälter aus einem Kunststoff, insbesondere einem Polyester, bestehen, der eine intrinsische Viskosität von 0,7 dl/g bis 1,6 dl/g, vorzugsweise 0,78 dl/g bis 0,90 dl/g gemessen nach ASTM D4603 aufweist. Eine schonende, eine übermässige Degradation vermeidende Verarbeitung derart hochviskoser Kunststoffmaterialien kann zwar einen erhöhten Aufwand erfordern, insbesondere können sich die Verweilzeiten des Kunststoffmaterials in der Preform-Herstellvorrichtung erhöhen. Andererseits kann durch die schonende Verarbeitung einer Spannungsbildung beim Abkühlen des Preforms begegnet werden. Eine schonende Verarbeitung des hochviskosen Kunststoffmaterials kann beispielsweise dadurch unterstützt werden, dass das Kunststoffmaterial durch einen Schmelzekanal zur Preformkavität transportiert wird, der an seiner engsten Stelle, am Eingang in die Preformkavität, einen deutlich grösseren Durchmesser besitzt als die üblicherweise eingesetzten Schmelzekanäle. Bei einem Preform, der in einem Spritzgiessprozess oder in einer Kombination von Spritzgiessen und Fliesspressverfahren hergestellt ist, kann sich dies in einem Anspritzpunkt im Preformboden zeigen, der einen Durchmesser von 5 mm bis 9,5 mm, vorzugsweise 5,4 mm bis 6,8 mm aufweist.

Bei der erwähnten Degradation kommt es zu einer Spaltung und damit zu einer Verkürzung der Polymermolekülketten. Eine Degradation kann durch Aufschmelzen und Aufscheren des zu verarbeitenden Kunststoffmaterials in der Extruderschnecke erfolgen, was letztlich zu einer Verringerung der Viskosität des Kunststoffmaterials führen kann. Erwünscht sind jedoch lange Molekülketten, da Preforms mit langen Molekülketten zu einer höheren Festigkeit der aus den Preforms gefertigten Kunststoffbehälter und zu einer höheren Widerstandskraft des Behälters gegenüber Innendruck, Schlag, Kriechen und Bersten führt. Der grosse Anspritzpunkt von 5 mm bis 9,5 mm kann diese Langkettigkeit gewährleisten. Dabei weist auch die unmittelbare Öffnung am Eintritt in die Preformkavität diesen vergrösserten Durchmesser auf, um den Gegendruck am Extruder zu verringern. Als Ergebnis des beispielsweise gegenüber einem Durchmesser des Anspritzpunktes von 3 mm deutlich reduzierten Gegendrucks kann das geschmolzene Kunststoffmaterial, insbesondere das geschmolzene Polyestermaterial, beim Eintritt in die Preformkavität eine Viskosität grösser 0,7 dl/g, vorzugsweise 0,78 dl/g bis 0,90 dl/g, aufweisen. Durch den grossen Durchmesser des Anspritzpunktes bzw. des Eintritts in die Preformkavität kann ein paralleles Ausrichten der Polymermolekülketten weitgehend vermieden werden und die angestrebte Viskosität erhalten bleiben. Dadurch kann ein allzu starkes Ausrichten der Molekülketten und eine daran anschliessende Kristallisation vermieden werden, welche an dem Preform als eine mit blossem Auge festellbare Trübung feststellbar wäre.

Kunststoffmaterialien mit den angegebenen hohen Viskositäten sind beispielsweise aus dem Extrusionsblasverfahren bekannt, bei dem die Viskosität des Kunststoffmaterials hoch genug sein muss, damit ein kontinuierlicher Kunststoffschlauch extrudierbar ist, ohne dass das Kunststoffmaterial dabei abtropft. Die Viskosität dieser Kunststoffmaterialien ist derart hoch, dass es bei den üblichen Herstellverfahren für Preforms in einem Spritzgiessprozess, oder in einer Kombination von Spritzgiessen und Fliesspressverfahren nur mit grossen Drücken und / oder hohen Temperaturen verarbeitet werden kann. Das Spritzgiessen kann mit einem Nadelverschluss des Schmelzekanals erfolgen. Es kann ein Heisskanal- oder ein Kaltkanalverfahren mit einem kurzen oder mit einem langen Anspritzpunkt eingesetzt werden. Die erwünschten höheren Viskositäten können auch mit niederviskosen Kunststoffen erzielt werden, indem diese vor dem Eintritt in den Extruder in einem separaten Trocknungsprozess unter Vakuum oder Stickstoff auf eine Viskosität von 0,7 dl/g bis 1,6 dl/g, vorzugsweise 0,78 dl/g bis 0,90 dl/g, aufkondensiert werden.

Der Aerosolbehälter kann ein- oder mehrschichtig ausgebildet sein. In einer Ausführungsvariante kann der Kunststoffbehälter eine Kunststoff-Hauptkomponente aus der Gruppe bestehend aus Polyethylenterephthalat, Polyethylennaphthalat, Polyethylenfuranoat, Polypropylenfuranoat, Polybutylenfuranoat, Polylactid, deren Copolymere und Gemischen der genannten Kunststoffe umfassen. Die angeführten Kunststoffe weisen grosse Ähnlichkeiten hinsichtlich ihrer Verarbeitbarkeit auf. Sie erlauben die Herstellung von transparenten Kunststoffbehältern in einem Spritzgiessverfahren, was insbesondere dem Wunsch nach transparenten Aerosoldruckbehältern entgegen kommt.

Die Kunststoff-Hauptkomponente kann zum Teil oder auch vollständig aus Regeneratmaterial bestehen. Im Fall von PET und PEF können sie wenigstens zum Teil auch aus biologischen Grundstoffen hergestellt werden. Die verwendeten Kunststoffmaterialien können Kurz- oder Langkettenverzweigungen aufweisen. Beispielsweise können die Polymermolekülketten sogenannte aufgepfropfte Verzweigungen oder ein "Long Chain Branching" (LCB) aufweisen, um die gewünschte hohe Viskosität zu erzielen. Die Polymermolekülketten können auch sogenannte funktionelle Gruppen enthalten, die erst bei der Herstellung des Preforms im Spritzguss zu den gewünschten Verzweigungen führen. Alternativ kann das Kunststoffmaterial auch Additive enthalten, welche beim Spritzguss zu jeglicher Art von Verzweigungen der Polymermolekülketten führen können. Ein Beispiel für derartige Additive sind sogenannte Chain Extender. Dabei wird jedoch darauf geachtet, dass es zu keiner Vernetzung kommt, die einer thermoplastischen Verformung des Kunststoffmaterials entgegen steht.

In einer weiteren Ausführungsvariante kann die Kunststoff-Hauptkomponente des spritzgegossenen Kunststoffbehälters bis zu 20 Gewichtsprozent von Fremdstoffen enthalten. Beispielsweise können der Kunststoff-Hauptkomponente Copolymere, Farbstoffe, UV-Blocker, Stabilisierungszusätze wie z.B. Glasfasern oder Glaskugeln oder Mischungen daraus, Additive oder Fremdpolymere beigemengt werden, um die gewünschten Eigenschaften des spritzgegossenen Kunststoffbehälters, wie z.B. UV-Beständigkeit und UV-Absorption, Wasserdampf- und Sauerstoffundurchlässigkeit und dergleichen mehr, einzustellen.

In einer weiteren Ausführungsvariante kann der Aerosolbehälter aus einem Kunststoff bestehen, dessen Kunststoff-Hauptkomponente weitere Kunststoffe aus der Gruppe bestehend aus PEN, PEF, PLA, Polyester, Polyamid, Polybutylenterephthalat, Polycarbonat, Polyolefine, Silicone, deren Copolymere und Mischungen der genannten Kunststoffe beigemengt sind. Dadurch können die Verarbeitungseigenschaften und auch die Festigkeit und die Barriereeigenschaften des Kunststoffmaterials gezielt auf den vorgesehenen Einsatz abgestimmt werden.

Der erfindungsgemäss als ein spritzgegossener Preform hergestellte Aerosolbehälter aus Kunststoff kann prinzipiell unterschiedliche Verpackungsgrössen aufweisen. Besonders zweckmässig kann er sich jedoch für Verpackungsgrössen von kleiner als 50 ml erweisen. Als Verpackungsgröße ist hierbei ein durch eine Innenwandung des Preforms begrenztes Volumen zu sehen. Derartige kleine Verpackungsgrössen können beispielsweise für Nasensprays, für Insektizide, für nikotinhaltige Flüssigkeiten und dergleichen mehr zur Anwendung kommen.

Gemäß einem weiteren Ausführungsbeispiel der Erfindung ist ein Aerosolbehälter vorgeschlagen, dessen Umfang des Standbereichs im Wesentlichen gleich einem Umfang des Preformkörpers ist. Mit dem Begriff "im Wesentlichen gleich" soll ausgedrückt werden, dass aufgrund von unterschiedlichen Schwund bei Abkühlung auf Raumtemperatur zwischen dem Preformkörper und dem Standbereich geringfügige Unterschiede im Umfang des Preformkörpers zum Umfang des Standbereichs auftreten können. Im Idealfall sind die beiden Umfänge gleich. Auch ist der Querschnitt des Preformkörpers nicht zwangsweise kreisförmig, sondern kann jede beliebige geometrische Form aufweisen, solange diese keine Hinterschnitte aufweist. Beispielsweise kann die Innenkontur im Querschnitt kreisförmig ausgestaltet sein und die Außenkontur als ein Polygon, beispielsweise ein regelmäßiges Sechseck, bilden.

Gemäß einem weiteren Ausführungsbeispiel der Erfindung ist ein Aerosolbehälter vorgeschlagen, dessen Umfang des Standbereichs kleiner als ein Umfang des Preformkörpers ist. Zur Entkopplung des Spritzzyklus vom Kühlzyklus werden in vielen Spritzgießmaschinen die Preforms außerhalb der Spritzgießmaschinen in sogenannten Cooling Tubes gekühlt. Hierbei ist es üblich, an der Außenseite der Preforms Unterdrücke zwischen 0,05 bis 0,95 bar anzulegen. An der Innenseite werden die Prefoms mit kalter Luft gespült, wobei Innendrücke bis etwa 10 bar erzeugt werden. Da das Material des Preforms beim Einführen in die Colling Tubes noch verformbar ist, kann durch Unterdruck und/oder Überdruck der Preformkörper vergrößert werden, ohne hierbei dessen Materialeigenschaften in abgekühltem Zustand zu verändern. Es hat sich gezeigt, dass eine axiale Vegrößerung und / oder eine radiale Vergrößerung des Preformkörpers um bis zu 3 mm möglich sind, also im Durchmesser eine Vergrößerung um 6 mm möglich ist. In der Regel ist der Standbereich des Kunststoffbehälters davon nicht betroffen. Auch kann durch Anlegen des Unterdrucks und / oder Überdrucks der Preformkörper in seiner Umfangsform verändert werden, also beispielsweise ein Sechseck oder ein Oval erzeugt werden.

Die derzeitigen an Aerosolbehältern montierten Aerosol Verschlüsse folgen einem FEA Standard 215, der die Halshöhe mit 4mm +/- 0,3mm spezifiziert. Um diesen 4mm Hals wird eine Metallschürze der Ventileinheit gebogen, auch crimpen genannt. An einer Oberseite des Halses sind zwei spitze, ringförmig umlaufene und sich parallel zueinander erstreckende Erhöhungen ausgebildet. Diese Erhöhungen werden von einem Dichtgummi überdeckt. Beim Crimping Prozeß werden die Erhöhungen in den Dichgummi gepresst, so dass sich eine gegenüber dem Innendruck beständige Verbindung zwischen Ventileinheit und Kunststoffbehälter ergibt. Der Dichtgummi ist in der Regel als Flachdichtung ausgeführt, kann jedoch auch als O-Ring ausgeführt sein.

Gemäß einem weiteren Ausführungsbeispiel der Erfindung ist an der Ventileinheit ein Eintauchschlauch oder ein Tauchrohr zur Entnahme der Flüssigkeit unlösbar verbunden, dessen freies Ende am tiefsten Punkt des konvexen kuppelförmigen Preformbodens endet.

Durch die konvexe, also nach außen gewölbte, kuppelförmige Ausgestaltung des Bodens des Kunststoffbehälters des Aerosolbehälters sammelt sich die Flüssigkeit am tiefsten Punkt dieses Bodens. Dadurch, dass das freie Ende des Schlauchs am tiefsten Punkt dieses Bodens endet, ist eine Restentleerung problemlos möglich. Die Restentleerung ist hierbei unabhängig von der Stellung des Druckkopfes möglich, der zumeist drehbar auf der Ventileinheit angeordnet ist.

Weitere Vorteile und Merkmale der Erfindung ergeben sich aus der nachfolgenden Beschreibung eines Ausführungsbeispiels unter Bezugnahme auf die schematischen, nicht massstabsgetreuen Abbildungen. Es zeigen:
- Fig. 1: eine perspektivische Ansicht eines vorgeschlagenen Aerosolbehälters in einer ersten Ausführungsform;
- Fig. 2: eine halbseitig axial geschnittene Darstellung des Aerosolbehälters;
- Fig. 3: eine Ausschnittsvergrößerung eines Halses des in Fig. 2 dargestellten Aerosolbehälters aus Kunststoff; und
- Fig. 4: eine perspektivische Ansicht des vorgeschlagenen Aerosolbehälters in einer zweiten Ausführungsform.

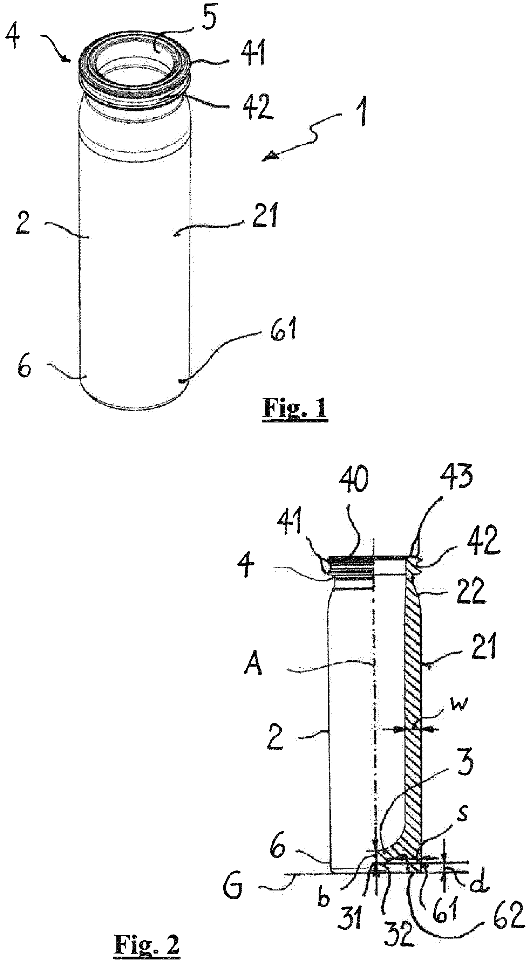

Ein in Fig. 1 dargestellter Aerosolbehälter aus Kunststoff ist gesamthaft mit dem Bezugszeichen 1 versehen. Der Aerosolbehälter 1 ist als ein spritzgegossener Preform ausgebildet und besitzt einen länglichen, röhrchenartigen Preformkörper 2 an den ein Hals 4 mit einer Öffnung 5 anschliesst. Der Hals 4 kann beispielsweise einen die Öffnung 5 berandenden Kragen 41 mit einer ringförmig umlaufenden Nut 42 aufweisen. Der Kragen 41 mit der ringförmig umlaufenden Nut 42 erleichtert die Montage einer nicht dargestellten Abgabevorrichtung, beispielsweise einer Ventileinheit, für eine im Aerosolbehälter unter Druck eines flüssigen oder gasförmigen Treibmittels gelagerte Flüssigkeit. Aus Gründen der besseren Übersicht wurde in den Abbildungen auf eine Darstellung der am Hals des Aerosolbehälters druckdicht montierten, mittels eines Druckknopfes betätigbaren Ventileinheit zur Abgabe eines Aerosols verzichtet.

An einer Oberseite 40 des Halses 4 des Preforms sind zwei spitze, ringförmig umlaufene und sich parallel zueinander erstreckende Erhöhungen 43 ausgebildet Diese Erhöhungen 43 sind von einem Dichtgummi überdeckbar. Beim Crimping Prozeß können die Erhöhungen in den Dichgummi gepresst werden, so dass sich eine gegenüber dem Innendruck beständige Verbindung zwischen Ventileinheit und Aerosolbehälter ergibt.. Der Preformkörper 2 besitzt eine Aussenwandung 21, die beispielsweise unmittelbar in einen Mantel 61 eines Standbereichs 6 des Kunststoffbehälters 1 übergeht. Somit bilden der Mantel 61 und die Aussenwandung 21 in dem hier vorliegenden Ausgestaltungsbeispiel einen Kreiszylinder. Der Standbereich 6 überragt dabei einen Preformboden, der den Preformkörper 2 an seinem dem Hals 4 gegenüberliegenden Längsende abschliesst. In Fig. 1 ist der Preformboden durch den Standbereich 6, der als ein in Umfangsrichtung geschlossener Zylinderabschnitt ausgebildet ist, verdeckt.

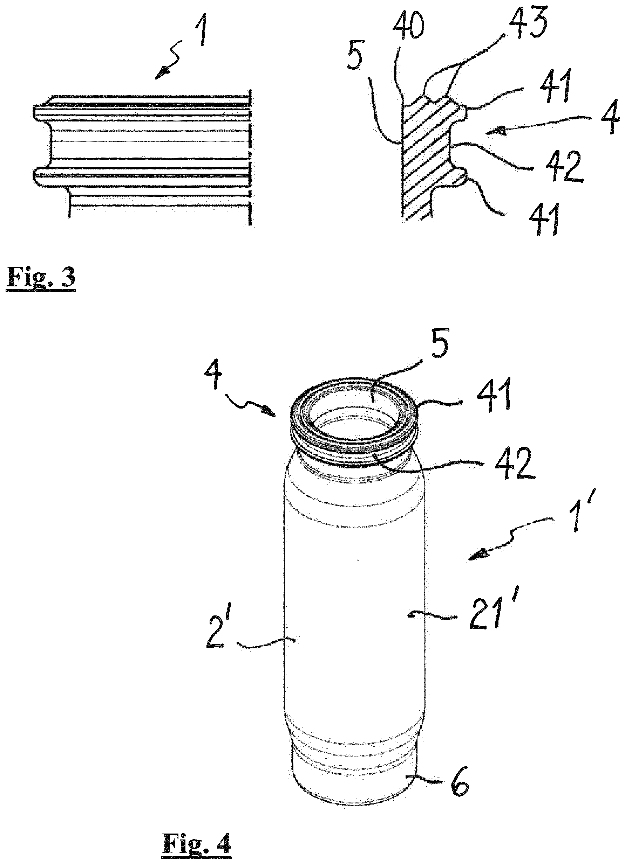

Fig. 2 zeigt den Aerosolbehälter 1 in einer halbseitig entlang einer Längsachse A geschnittenen Darstellung. Der Preformkörper 2 weist eine Wandstärke auf, die 1 mm bis 6 mm beträgt. Zum Hals 4 hin kann der Preformkörper 2 unter Bildung einer Schulter 22 verjüngt ausgebildet sein. Wie besser in Fig. 3 ersichtlich, die eine Ausschnittsvergrößerung des Halses aus Fig. 2 darstellt, besitzt der Hals 4 zwei sich radial nach außen erstreckende Krägen 41, die durch eine ringförmig umlaufenden Nut 42 voneinander beabstandet sind. Der obere der beiden Krägen 41 schließt im Wesentlichen an die Oberseite 40 des Preformhalses 4 an. Der am dem Hals 4 gegenüberliegenden axialen Längsende des Preformkörpers 2 angeordnete Preformboden 3 weist eine konvexe, sich also nach außen erstreckende, kuppelförmige Gestalt auf und besitzt eine Wandstärke b von 1 mm bis 6 mm. Die Wandstärke des Preformbodens 3 und die Wandstärke w des Preformkörpers 2 können verschieden voneinander ausgebildet sein. Die kuppelförmige Gestalt des Preformbodens 3 ist der Form eines Kugelabschnitts angenähert. Dadurch können innendruckbedingte Biegespannungen im Behälterboden 3 vermieden werden.

Der in Fig. 2 wiederum mit dem Bezugszeichen 6 versehene Standabschnitt ist als ein hohlzylindrischer Fortsatz der Wandung des Preformkörpers 2 ausgebildet. Der Standabschnitt besitzt eine Wandstärke s von 1 mm bis 6 mm. Die Wandstärke s des Standabschnitts 6 kann verschieden von der Wandstärke w des Preformkörpers 2 ausgebildet sein.

Beispielsweise kann sich die Wandstärke des Standabschnitts 6 zu seinem freien Ende hin verringern.

Eine Standfläche 62 des Standbereichs 6 des Aerosolbehälters 1 aus Kunststoff überragt eine Außenseite 32 des konvexen Preformboden 3 an seiner in Gebrauchslage tiefsten Stelle 31, welche beispielsweise der Anspritzpunkt des Aerosolbehälters 1 sein kann, um eine Distanz d von 1,5 mm bis 3 mm, vorzugsweise um 1,8 mm bis 2,6 mm. Als Gebrauchslage wird dabei die aufrechte Position des auf seinen Standbereich 6 auf eine ebene Unterlage G abgestellten Aerosolbehälters 1 angesehen. Bei den angeführten Abständen des Behälterbodens 3 von der Unterlage G kann gewährleistet werden, dass der Behälterboden 3, insbesondere der Anspritzpunkt 31, nicht in Berührung mit einer beispielsweise auf der Unterlage G vorhandenen Lache einer Seifenlauge oder dergleichen kommt. Es soll darauf verwiesen werden, dass die Einspritzung des Kunststoffs zur Erzeugung des Aerosolbehälters 1 nicht an dem Anspritzpunkt 31 erfolgen muss, der im Wesentlichen mittig am Boden ist, sondern auch an jeder anderen Stelle des Aerosolbehälters 1. Auch kann der Kunststoff an mehreren Stellen eingespritzt werden. Ferner kann der Aerosolbehälter mit einem Kunststoff beispielsweise in einer anderen Farbe überspritzt werden (2-schichtig) oder einen farbigen Layer enthalten (3-schichtig). Auch kann der Aerosolbehälter eine Barriereschicht enthalten.

Fig. 4 zeigt einen Aerosolbehälter 1' ähnlich dem Aerosolbehälter 1 aus Fig. 1, Dieser Aerosolbehälter 1' wurde außerhalb der Spritzgußmaschine in einer sogenannten Cooling Tube abgekühlt, die einen größeren Innendurchmesser aufweist als der Außendurchmesser des gespritzten und zum Abkühlen bereitgestellten Aerosolbehälters. Nach Einlegen des gespritzten Aerosolbehälters in die Cooling Tube wurde dieser durch Anlegen eines Unterdrucks und Spülen des Innenraums des Aerosolbehälters mit kalter Luft unter Überdruck auf Raumtemperatur abgekühlt. Hierbei wurde Material des Preformkörpers an die Innenwandung der Cooling Tubes gedrückt und der Preformkörper 2' in seinem Umfang vergrößert. Ensprechend überragt die Aussenwandung 21' des der Cooling Tube entnommenen Aerosolbehälters 1' den Standbereich 6.

Der als eine spritzgegossener Preform ausgebildete innendruckbeständige Aerosolbehälter 1 weist beispielsweise eine axiale Gesamtlänge von 70,5 mm + 1,5 mm auf. Die Länge des Halses 4 beträgt beispielsweise 5,1 mm. Ein Aussendurchmesser des Preformkörpers 2 beträgt beispielsweise 19,3 mm. Ein Aussendurchmesser der beiden an dem Hals 4 angeordneten Krägen 41 ist beispielsweise 19,9 mm + 0,1 mm. Die Wandstärke w des Preformkörpers beträgt dabei beispielsweise 3,4 mm. Zum Hals 4 hin verjüngt sich die Wandstärke w des Preformkörpers 2 unter Bildung der Schulter 22. An einer engsten Stelle am Übergang der Schulter 22 zum Hals 4 weist der Preformkörper 2 beispielsweise einen Aussendurchmesser von 16,6 mm auf. Die Wandstärke b des Behälterbodens 3 beträgt beispielsweise 2,8 mm. Die Distanz d, um welche der Standbereich 6 den tiefsten Punkt 31, beispielsweise den Anspritzpunkt des Aerosolbehälters 1, überragt, beträgt beispielsweise 2 mm. Die Wandstärke s des Standbereichs 6 entspricht typischer weise 50 bis 100% der Wandstärke des Preformkörpers 2. Wo nicht anders angegeben beträgt die Toleranz der Masse ± 0,3 mm.

Der Aerosolbehälter 1,1' aus Kunststoff ist als ein spritzgegossener Preform ausgebildet. Unter dem Begriff spritzgegossen wird dabei auch eine Kombination von Spritzgiessen und Fliesspressverfahren verstanden. Dabei wird eine Kunststoff-Hauptkomponente des Preforms verwendet, welche wenigstens 80 % der Gesamtmasse des Preforms ausmacht, die bei Eintritt in eine Preformkavität eine Viskosität, gemessen nach ASTM D4603, aufweist, die gegenüber einer Ausgangsviskosität der Kunststoff-Hauptkomponente um maximal 0,15 dl/g abgebaut hat. Die Viskosität der Kunststoffhauptkomponente bei Eintritt in den Extruder wird dabei auf 0,7 dl/g bis 1,6 dl/g, vorzugsweise 0,78 dl/g bis 0,90 dl/g, eingestellt. Wenigstens der Preformkörper 2 des Preforms kann ein- oder mehrlagig ausgebildet sein und zu wenigstens 80 Gewichtsprozent (% w/w) aus einer Kunststoff-Hauptkomponente aus der Gruppe bestehend aus Polyethylenterephthalat, Polyethylennaphthalat, Polyethylenfuranoat, Polylactid, deren Copolymere und Gemischen der genannten Kunststoffe bestehen. Der Kunststoff-Hauptkomponente können bis zu 20 % w/w Fremdstoffe zugemischt sein. Beispielsweise können der Kunststoff-Hauptkomponente Copolymere, Farbstoffe, UV-Blocker, Stabilisierungszusätze wie z.B. Glasfasern oder Glaskugeln oder Mischungen daraus, Additive oder Fremdpolymere zugemischt werden. Die Kunststoff-Hauptkomponente kann auch noch weitere Kunststoffe aus der Gruppe bestehend aus PEN, PEF,PPF, PBF PLA, Polyester, Polyamid, Polybutylenterephthalat, Polycarbonat, Polyolefine, Silicone, deren Copolymere und Mischungen der genannten Kunststoffe aufweisen.

Der vorgeschlagene Aerosolbehälter, der als ein spritzgegossener Preform ausgebildet ist, ist innendruckbeständig, weist nur wenige bis keine Spannungen auf, ist resistent gegenüber dem Phänomen des Stress-Cracking. Aufgrund der eingesetzten Kunststoffe kann der Aerosolbehälter auch wenigstens bereichsweise transparent ausgebildet sein.

## Patentansprüche

1. Aerosolbehälter aus Kunststoff mit einem Hals, dessen Öffnung durch eine mittels eines Druckkopfes betätigbare Ventileinheit druckdicht verchliessbar bzw. verschlossen ist, und der mit einem flüssigen oder gasförmigen Treibmittel und einer zu versprühenden Flüssigkeit befüllbar bzw. gefüllt ist, wobei der Aerosolbehälter als ein spritzgegossener Preform mit einem länglichen, röhrchenartigen Preformkörper (2, 2') ausgebildet ist, der einen konvexen kuppelförmigen Preformboden (3) aufweist, welcher in einer axialen Richtung von einem einstückig angeformten Standbereich (6) überragt wird, und an seinem gegenüberliegenden axialen Längsende einen an den Preformkörper (2, 2') anschliessenden Hals (4) mit der Öffnung (5) aufweist.

2. Aerosolbehälter nach Anspruch 1, **dadurch gekennzeichnet, dass** er eine Berstdruckbeständigkeit von gleich oder grösser 2200 kPa, vorzugsweise von 3000 kPa bis 4000 kPa aufweist.

3. Aerosolbehälter nach Anspruch 1 oder 2, **dadurch gekennzeichnet, dass** eine Standfläche (62) des Standbereichs (6) eine Außenseite (32) des konvexen Preformbodens (3) an seiner tiefsten Stelle (31) um eine Distanz (d) von 1,5 mm bis 3 mm, vorzugsweise um 1,8 mm bis 2,6 mm überragt.

4. Aerosolbehälter nach einem der Ansprüche 1 bis 3, **dadurch gekennzeichnet, dass** der Standbereich (6) als ein in Umfangsrichtung geschlossener Hohlzylinderabschnitt ausgebildet ist.

5. Aerosolbehälter nach einem der Ansprüche 1 bis 3, **dadurch gekennzeichnet, dass** der Standbereich von einer vorbestimmten Anzahl den Preformboden (3) überragenden Standbeinen gebildet ist, die durch sich im wesentlichen in axialer Richtung erstreckende Längsschlitze voneinander getrennt sind.

6. Aerosolbehälter nach Anspruch 5, **dadurch gekennzeichnet, dass** die vorbestimmte Anzahl der Standbeine wenigstens drei beträgt.

7. Aerosolbehälter nach einem der vorangehenden Ansprüche, **dadurch gekennzeichnet, dass** der Standbereich (6) eine radial gemessene Wandstärke (s) von 1 mm bis 6 mm aufweist.

8. Aerosolbehälter nach einem der vorangehenden Ansprüche, **dadurch gekennzeichnet, dass** der Preformkörper (2, 2') eine Wandstärke (w) aufweist, die 1 mm bis 6 mm beträgt.

9. Aerosolbehälter nach einem der vorangehenden Ansprüche, **dadurch gekennzeichnet, dass** der Preformboden (3) eine Wandstärke (b) aufweist, die 1 mm bis 6 mm beträgt.

10. Aerosolbehälter nach einem der vorangehenden Ansprüche, **dadurch gekennzeichnet, dass** der Preformkörper (2, 2') wenigstens einen transparenten Abschnitt aufweist, der sich über seine axiale Länge erstreckt.

11. Aerosolbehälter nach einem der vorangehenden Ansprüche, **dadurch gekennzeichnet, dass** wenigstens sein Preformkörper (2, 2') zur Gänze transparent ausgebildet ist.

12. Aerosolbehälter nach einem der vorangehenden Ansprüche, **dadurch gekennzeichnet, dass** er aus einem Kunststoff besteht, der beim Spritzgiessen ein Verhältnis seiner Fliesslänge zur spritzgegossenen Wandstärke des Preforms von 20 bis 70 aufweist.

13. Aerosolbehälter nach einem der vorangehenden Ansprüche, **dadurch gekennzeichnet, dass** er aus einem Kunststoff, insbesondere aus einem Polyester, besteht, der eine intrinsische Viskosität von 0,7 dl/g bis 1,6 dl/g, vorzugsweise 0,78 dl/g bis 0,90 dl/g gemessen nach ASTM D4603 aufweist.

14. Aerosolbehälter nach einem der vorangehenden Ansprüche, **dadurch gekennzeichnet, dass** er eine Kunststoff-Hauptkomponente aus der Gruppe bestehend aus Polyethylenterephthalat, Polyethylennaphthalat, Polyethylenfuranoat, Polylactid, Polypropylenfuranoat, Polybutylenfuranoat, deren Copolymere und Gemischen der genannten Kunststoffe umfasst.

15. Aerosolbehälter nach Anspruch 14, **dadurch gekennzeichnet, dass** der Kunststoff-Hauptkomponente bis zu 20 Gewichtsprozent Fremdstoffe beigemischt sind.

16. Aerosolbehälter nach Anspruch 15, **dadurch gekennzeichnet, dass** die Fremdstoffe Copolymere, Farbstoffe, UV-Blocker, Stabilisierungszusätze wie z.B. Glasfasern oder Glaskugeln oder Mischungen daraus, Additive oder Fremdpolymere sind.

17. Aerosolbehälter nach einem der Ansprüche 13 bis 16, **dadurch gekennzeichnet, dass** er aus einem Kunststoff besteht, der neben der Kunststoff-Hauptkomponente noch weitere Kunststoffe aus der Gruppe bestehend aus PEN, PEF, PLA, Polyester, Polyamid, Polybutylenterephthalat, Polycarbonat, Polyolefine, Silicone, deren Copolymere und Mischungen der genannten Kunststoffe umfasst.

18. Aerosolbehälter nach einem der vorangehenden Ansprüche, **dadurch gekennzeichnet, dass** er eine Verpackungsgrösse von kleiner als 50 ml aufweist.

19. Aerosolbehälter nach einem der vorangehenden Ansprüche, **dadurch gekennzeichnet, dass** ein Umfang des Standbereichs (6) im Wesentlichen gleich einem Umfang des Preformkörpers (2) ist.

20. Aerosolbehälter nach einem der Ansprüche 1 bis 18, **dadurch gekennzeichnet, dass** ein Umfang des Standbereichs (6) kleiner als ein Umfang des Preformkörpers (2') ist.

21. Aerosolbehälter nach einem der vorangehenden Ansprüche, **dadurch gekennzeichnet, dass** an der Ventileinheit ein Eintauchschlauch zur Entnahme der Flüssigkeit unlösbar verbunden ist, dessen freies Ende am tiefsten Punkt des konvexen kuppelförmigen Preformbodens endet.

## Claims

1. An aerosol container of plastic with a neck whose opening is closable or closed in a pressure-tight manner by way of a valve unit which can be actuated by a push button, said aerosol container being fillable or filled with a liquid or gaseous propellant and a liquid which is to be sprayed, wherein the aerosol container is designed as an injection-moulded preform with an elongate, tube-like preform body (2, 2'), said preform body comprising a convex, dome-shaped preform base (3), beyond which a standing region (6) which is integrally formed as one piece projects in the axial direction and at its opposite axial longitudinal end comprising a neck (4) with an opening (5), said neck connecting onto the preform body (2, 2').

2. An aerosol container according to claim 1, **characterised in that** it has a bursting pressure resistance of equal to or larger than 2200 kPA, preferably from 3000 kPa to 4000 kPa.

3. An aerosol container according to claim 1 or 2, **characterised in that** a standing surface (62) of the standing region (6) projects beyond an outer side (32) of the convey preform base (3) at its deepest location (31) by a distance (d) of 1.5 mm to 3 mm, preferably by 1.8 mm to 2.6 mm.

4. An aerosol container according to one of the claims 1 to 3, **characterised in that** the standing region (6) is designed as a hollow cylinder section which is closed in the peripheral direction.

5. An aerosol container according to one of the claims 1 to 3, **characterised in that** the standing region is formed by a predefined number of standing legs which project beyond the preform base and which are separated from one another by way of longitudinal slots which extend essentially in the axial direction.

6. An aerosol container according to claim 5, **characterised in that** the predefined number of standing legs is at least three.

7. An aerosol container according to one of the preceding claims, **characterised in that** the standing region (3) has a radially measured wall thickness (s) of 1 mm to 6 mm.

8. An aerosol container according to one of the preceding claims, **characterised in that** the preform body (2, 2') has a wall thickness (w) which is 1 mm to 6 mm.

9. An aerosol container according to one of the preceding claims, **characterised in that** the preform base (2, 2') has a wall thickness (b) which is 1 mm to 6 mm.

10. An aerosol container according to one of the preceding claims, **characterised in that** the preform body (2, 2') comprises at least one transparent section which extends over its axial length.

11. An aerosol container according to one of the preceding claims, **characterised in that** at least its preform body (2, 2') is designed completely transparently.

12. An aerosol container according to one of the preceding claims, **characterised in that** it consists of a plastic which on injection moulding has a ratio of its flow length to the injection moulded wall thickness of the preform of 20 to 70.

13. An aerosol container according to one of the preceding claims, **characterised in that** it consists of a plastic, in particular of a polyester, which has an intrinsic viscosity of 0.7 dl/g to 1.6 dl/g, preferably 0.78 dl/g to 0.90 dl/g measured according to ASTM D4603.

14. An aerosol container according to one of the preceding claims, **characterised in that** it comprises a plastic main component from the group consisting of polyethylene terephthalate, polyethylene naphthalate, polyethylene furanoate, polylactide, polypropylene furanoate, polybutylene furanoate, their copolymers and mixtures of the mentioned plastics.

15. An aerosol container according to claim 14, **characterised in that** up to 20 percent by weight of foreign substances are admixed to the plastic main component.

16. An aerosol container according to claim 15, **characterised in that** the foreign substances are copolymers, dyes, UV blockers, stabilisation additives such as e.g. glass fibres or glass balls or mixtures thereof, additives or foreign polymers.

17. An aerosol container according to claim 13 to 16, **characterised in that** it consists of a plastic, which apart from the plastic main component comprises yet further plastics from the group consisting of PEN, PEF, PLA, polyester, polyamide, polybutylene terephthalate, polycarbonate, polyolefins, silicones, their copolymers and mixtures of the mentioned plastics.

18. An aerosol container according to one of the preceding claims, **characterised in that** it has a packaging size of smaller than 50 ml.

19. An aerosol container according to one of the preceding claims, **characterised in that** a periphery of the standing region (6) is essentially equal to a periphery of the preform body (2).

20. An aerosol container according to one of the claims 1 to 18, **characterised in that** a periphery of the standing region (6) is smaller than a periphery of the preform body (2').

21. An aerosol container according to one of the preceding claims, **characterised in that** an immersion tube for removal of the liquid and whose free end ends at the deepest point of the convex dome-shaped preform base is unreleasably connected to the valve unit.

## Revendications

1. Récipient aérosol en matière plastique doté d'un col dont l'ouverture peut être fermée ou est fermée de manière étanche à la pression par une unité de valve pouvant être actionnée par une tête de pression, et qui peut être rempli ou est rempli avec un agent propulseur liquide ou gazeux et un liquide à pulvériser, sachant que le récipient aérosol est réalisé en tant que préforme moulée par injection, comprenant un corps de préforme (2, 2') allongé en forme de tube présentant un fond de préforme (3) convexe en forme de dôme qui est dépassé dans une direction axiale par une partie d'appui (6) formée d'une seule pièce avec lui, et présentant, à son extrémité longitudinale axiale opposée, un col (4) se raccordant au corps de préforme (2, 2') et doté de l'ouverture (5).

2. Récipient aérosol selon la revendication 1, **caractérisé en ce qu'**il présente une résistance à la pression d'éclatement qui est égale ou supérieure à 2 200 kPa, de préférence comprise entre 3 000 kPa et 4 000 kPa.

3. Récipient aérosol selon la revendication 1 ou 2, **caractérisé en ce qu'**une surface d'appui (62) de la partie d'appui (6) dépasse par rapport à une face externe (32) du fond de préforme (3) convexe, en son point le plus bas (31), d'une distance (d) comprise entre 1,5 mm et 3 mm, de préférence entre 1,8 mm et 2,6 mm.

4. Récipient aérosol selon l'une des revendications 1 à 3, **caractérisé en ce que** la partie d'appui (6) est réalisée sous la forme d'une partie de cylindre creux fermé dans la direction périphérique.

5. Récipient aérosol selon l'une des revendications 1 à 3, **caractérisé en ce que** la partie d'appui est constituée d'un nombre prédéfini de pieds d'appui qui dépassent par rapport au fond de préforme (3) et sont séparés les uns des autres par des fentes longitudinales s'étendant sensiblement dans la direction axiale.

6. Récipient aérosol selon la revendication 5, **caractérisé en ce que** le nombre prédéfini de pieds d'appui est au moins de trois.

7. Récipient aérosol selon l'une des revendications précédentes, **caractérisé en ce que** la partie d'appui (6) présente une épaisseur de paroi (s) comprise entre 1 mm et 6 mm, mesurée dans le sens radial.

8. Récipient aérosol selon l'une des revendications précédentes, **caractérisé en ce que** le corps de préforme (2, 2') présente une épaisseur de paroi (w) qui est comprise entre 1 mm et 6 mm.

9. Récipient aérosol selon l'une des revendications précédentes, **caractérisé en ce que** le fond de préforme (3) présente une épaisseur de paroi (b) qui est comprise entre 1 mm et 6 mm.

10. Récipient aérosol selon l'une des revendications précédentes, **caractérisé en ce que** le corps de préforme (2, 2') présente au moins une partie transparente qui s'étend sur sa longueur axiale.

11. Récipient aérosol selon l'une des revendications précédentes, **caractérisé en ce qu'**au moins son corps de préforme (2, 2') est réalisé sous une forme totalement transparente.

12. Récipient aérosol selon l'une des revendications précédentes, **caractérisé en ce qu'**il est constitué d'une matière plastique qui, lors du moulage par injection, présente un rapport entre sa longueur de fluage et l'épaisseur de paroi, moulée par injection, de la préforme qui est compris entre 20 et 70.

13. Récipient aérosol selon l'une des revendications précédentes, **caractérisé en ce qu'**il est constitué d'une matière plastique, en particulier d'un polyester qui présente une viscosité intrinsèque allant de 0,7 dl/g à 1,6 dl/g, de préférence de 0,78 dl/g à 0,90 dl/g, mesurée selon ASTM D4603.

14. Récipient aérosol selon l'une des revendications précédentes, **caractérisé en ce qu'**il comporte un constituant principal de matière plastique issu du groupe comprenant le polyéthylène-téréphtalate, le polyéthylène-naphtalate, le polyéthylène-furanoate, le polylactide, le polypropylène-furanoate, le polybutylène-furanoate, leurs copolymères et des mélanges des matières plastiques citées.

15. Récipient aérosol selon la revendication 14, **caractérisé en ce que** jusqu'à 20 pour cent en poids de matières étrangères sont mélangés au constituant principal de matière plastique.

16. Récipient aérosol selon la revendication 15, **caractérisé en ce que** les matières étrangères sont des copolymères, des colorants, des bloqueurs d'UV, des additifs stabilisants tels que des fibres de verre ou des billes de verre ou des mélanges de celles-ci, des additifs ou des polymères étrangers.

17. Récipient aérosol selon l'une des revendications 13 à 16, **caractérisé en ce qu'**il est constitué d'une matière plastique qui comporte, outre le constituant principal de matière plastique, d'autres matières plastiques issues du groupe comprenant PEN, PEF, PLA, polyester, polyamide, polybutylène-téréphtalate, polycarbonate, polyoléfines, silicones, leurs copolymères et des mélanges des matières plastiques citées.

18. Récipient aérosol selon l'une des revendications précédentes, **caractérisé en ce qu'**il présente un volume d'emballage inférieur à 50 ml.

19. Récipient aérosol selon l'une des revendications précédentes, **caractérisé en ce qu'**une circonférence de la partie d'appui (6) est sensiblement égale à la circonférence du corps de préforme (2).

20. Récipient aérosol selon l'une des revendications 1 à 18, **caractérisé en ce qu'**une circonférence de la partie d'appui (6) est plus petite que la circonférence du corps de préforme (2').

21. Récipient aérosol selon l'une des revendications précédentes, **caractérisé en ce qu'**un tube plongeur souple destiné au prélèvement du liquide est lié de façon inamovible à l'unité de valve, tube dont l'extrémité libre se termine au point le plus bas du fond de préforme convexe en forme de dôme.
